# EUROPEAN PATENT SPECIFICATION

(11) **EP 2 612 962 B1**
(45) Date of publication and mention of the grant of the patent: **19.05.2021**
(21) Application number: 13150266.8
(22) Date of filing: 04.01.2013
(51) Int. Cl.: D06F 39/02

(54) **Detergent feeding apparatus and washing machine having the same**
Waschmittelzuführungsvorrichtung und Waschmaschine damit
Appareil d' approvisionnement en détergent et machine à laver dotée de celui-ci

(30) Priority: 06.01.2012 KR 20120002104
(43) Date of publication of application: 10.07.2013
(73) Proprietor: Samsung Electronics Co., Ltd., Gyeonggi-do 443-742 (KR)
(72) Inventor: Kim, Yong Kwon, Gyeonggi-do (KR); Ko, Hong Seok, Gyeonggi-do (KR); Lee, Sang Up, Gyeonggi-do (KR)
(74) Representative: Grünecker Patent- und Rechtsanwälte PartG mbB

(56) References cited:
- EP-A1- 1 329 188
- DE-A1-102006 024 152
- DE-A1-102007 028 214
- GB-A- 2 111 021
- GB-A- 2 427 397

## Description

### 1. Field

Embodiments of the present disclosure relate to a washing machine, and more particularly, to a detergent feeding apparatus configured to supply suggested amount of detergent

### 2. Description of the Related Art

A washing machine is an apparatus configured to wash clothes comprising a tub to store wash water, a drum rotatively installed at an inside the tub, and a motor to drive the drum.

In a state when a laundry and detergent water are put unto an inside the drum, as the drum is rotated by the motor, the laundry is cleaned.

As the type of the detergent used to remove stain on a laundry, a powder detergent and a liquid detergent are present, and recently, compared with the power detergent, the liquid detergent that dissolves well in water and is not scattered by a wind is widely being used.

A detergent is automatically introduced to the drum, but prior to being introduced to the drum, a user is needed to put a certain amount of detergent into a detergent container before performing a wash operation.

As a user puts detergent into the detergent container, a designated amount of the detergent may not be supplied, and as the detergent is needed to be put into every time when a wash is needed, the detergent is needed to be automatically supplied.

DE 10 2006 024 152 A1 discloses a household appliance such as, for example, a washing machine. The washing machine can comprise a cabinet and there is also a tub disposed on the inside of the cabinet. Detergent or the like is directly supplied to the interior of the household appliance and a dosing means may be used with a detergent container housing, wherein the housing is attached to an inside of a door. The container is used for accommodating a detergent or active ingredients.

EP 1 329 188 A1 discloses a multi-dose dispenser of liquid additives for household appliances. The dispenser might be used for supplying a liquid additive to washing machines. There is a housing used for a kind of detergent feeding apparatus to supply at least one detergent into a washing vessel or the like. The feeding apparatus is not used to supply at least one detergent along with wash water to the tub.

It is an object to provide a detergent feeding apparatus capable of automatically supplying a detergent, and in particular, supplying a suggested amount of detergent, and a washing machine having the same.

Additional aspects will be set forth in part in the description which follows and, in part, will be obvious from the description, or may be learned by practice of the disclosure.

The object is solved by the features of the independent claim.

Advantageous embodiments are disclosed by the sub-claims.

The inlet valve and the outlet valve may alternatively operate, and an introduction of the detergent into the detergent accommodating room and a discharge of the detergent from the detergent accommodating room are alternatively occurred.

The detergent feeding apparatus includes a valve driving unit disposed at a lower portion of the valve apparatus, and is configured in a way that the inlet valve and the outlet valve are alternatively operated.

The valve apparatus my further include an inlet shaft configured to allow the inlet valve to operate in a way to move vertically, and an outlet shaft configured to allow the outlet valve to operate in a way to move vertically.

The valve driving unit may include a cam rotatively disposed at a lower portion of the valve apparatus. As the cam is rotated, the outlet shaft and the inlet shaft are alternatively ascended or descended.

The cam may include an inlet protrusion to move the inlet shaft vertically, and an outlet protrusion to move the outlet shaft vertically.

The inlet protrusion and the outlet protrusion may be formed while facing opposite direction to each other.

The outlet hole discharges wash water to the outlet valve.

The detergent container may include an automatic detergent accommodating unit at which detergent automatically supplied by the valve apparatus is accommodated, and a manual detergent accommodating unit at which detergent manually supplied is accommodated.

The automatic detergent accommodating unit may be connected to the at least one valve apparatus.

The detergent feeding apparatus, in order to supply wash water to the manual detergent accommodating unit, may further include a dispenser mounted at an inside the detergent container housing while being disposed at an upper portion of the manual detergent accommodating unit.

The dispenser may include at least one flow path configured to supply wash water to the manual detergent accommodating unit.

The detergent feeding apparatus may further include a distribution flow path that is configured to supply wash water to the valve apparatus and connected to the dispenser.

The at least one flow path may include a distribution hole formed in a way that wash water is distributed to the distribution flow path.

The distribution flow path may include the outlet hole formed at one end portion of the distribution flow path to discharge wash water toward the valve apparatus.

The dispenser may include at least one partition to divide the at least one flow path, and a distribution protrusion protrudedly formed from the partition to surround a portion of the distribution hole.

By controlling a size of the distribution protrusion, the amount of wash water introduced to the distribution hole may be controlled.

The valve apparatus includes an inlet valve to open/close the detergent inlet hole, and an outlet valve to open/close the detergent outlet hole.

Wash water may be supplied toward the detergent outlet hole.

The detergent feeding apparatus may further include a distribution flow path configured in a way that wash water at the dispenser is distributed to the valve apparatus.

The distribution flow path may be configured to discharge wash water to the outlet valve of the valve apparatus.

The dispenser may include a distribution hole configured in a way that wash water is introduced to the distribution flow path.

The dispenser may include a distribution protrusion formed around the distribution hole to introduce wash water to the distribution hole.

As a user inputs detergent at one time, a certain amount of detergent is automatically input to an inside a tub.

### BRIEF DESCRIPTION OF THE DRAWINGS

These and/or other aspects will become apparent and more readily appreciated from the following description of the embodiments, taken in conjunction with the accompanying drawings of which:
FIG. 1 is a drawing illustrating a structure of a washing machine in accordance with one embodiment.
FIG. 2 is a perspective view illustrating a detergent feeding apparatus of a washing machine in accordance with one embodiment.
FIG. 3 is a perspective view illustrating a detergent container of the detergent feeding apparatus on FIG. 2.
FIG. 4 is a perspective view illustrating a detergent container housing of the detergent feeding apparatus on FIG. 2.
FIG. 5 is a top view a housing body of the detergent container housing on FIG. 4.
FIG. 6 is a drawing illustrating a valve apparatus of the detergent feeding apparatus on FIG. 2.
FIG. 7 is a drawing illustrating a structure of the valve apparatus of FIG. 6.
FIG. 8 is a drawing illustrating a valve driving unit of the valve apparatus of FIG. 6.
FIG. 9 is a cross-sectional view of the valve apparatus on FIG. 6.
FIGS. 10 to 11 are drawings illustrating an operation of the valve apparatus on FIG. 6.
FIG. 12 is a drawing illustrating a dispenser of FIG. 4.
FIGS. 13 to 14 are drawings illustrating a flow of wash water of a detergent feeding apparatus of a washing machine in accordance with one embodiment.

### DETAILED DESCRIPTION

Reference will now be made in detail to the embodiments, examples of which are illustrated in the accompanying drawings, wherein like reference numerals refer to like elements throughout.

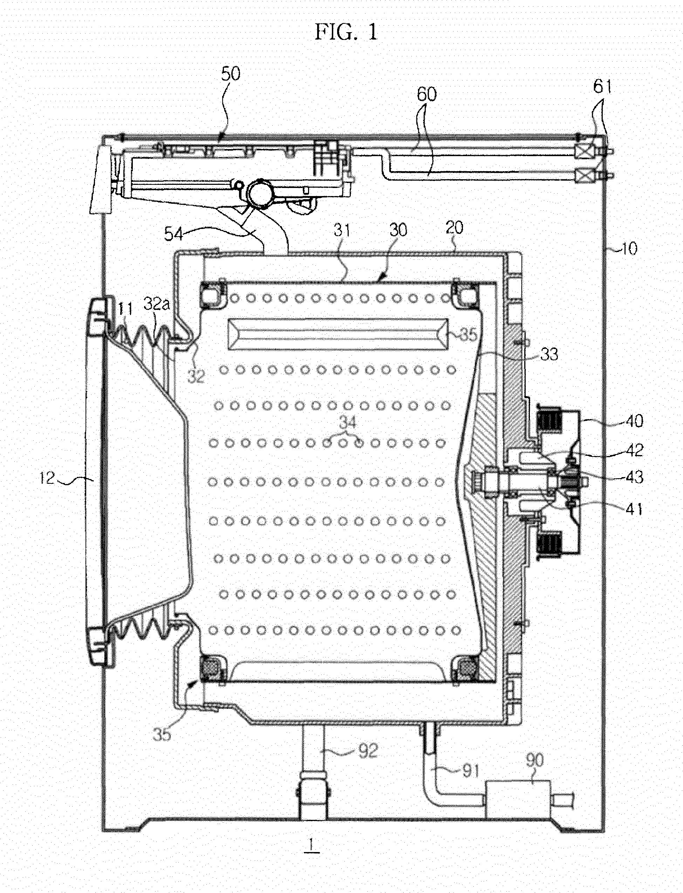

FIG. 1 is a drawing illustrating a structure of a washing machine in accordance with one embodiment.

As illustrated on FIG. 1, a washing machine 1 includes a cabinet 10 forming an exterior, a tub 20 disposed at an inside the cabinet 10, a drum 30 rotatively disposed at an inside the tub 20, and a motor 40 to drive the drum 30.

An input hole 11 is formed at a front surface unit of the cabinet 10 to input a laundry to an inside the drum 30. The input hole 11 is open/closed by a door 12 installed at a front surface of the cabinet 10.

The tub 20 is supported by a damper 92. The damper 92 connects a bottom surface of an inner side of the cabinet 10 to an outer surface of the tub 20.

A drain pump 90 and a drain pipe 91 are installed at a lower portion of the tub 20 to discharge the water at an inside the tub 20 to an outside the cabinet 10.

The drum 30 includes a cylindrical unit 31, a front surface panel 32 disposed at a front of the cylindrical unit 31, and a rear surface panel 33 disposed at a rear of the cylindrical unit 31. An opening hole 32a is formed at the front surface panel 32 for an entry/exit of a laundry, and a driving shaft 41 is connected to the rear panel 33 to deliver a driving force of the motor 40.

A plurality of through-holes 34, are provided at a circumference of the drum 30, such that an inside space of the drum 30 and an inside space of the tub 20 are communicated with one another, allowing wash water to pass through.

A plurality of lifters 35 are installed at an inner circumferential surface of the drum 30, such that a laundry may ascend and descend when the drum 30 is rotated.

A driving shaft 41 is disposed in between the drum 30 and the motor 40. One end of the driving shaft 41 is connected to the rear surface panel 33 of the drum 30, and the other end of the driving shaft 41 is extended to the outside of the rear wall of the tub 20. As the motor 40 drives the driving shaft 41, the drum 30 connected to the driving shaft 41 is rotated while having the driving shaft 41 as a center of rotation.

A bearing housing 42 is installed at a rear wall of the tub 20, such that the driving shaft 41 is rotatively supported. The bearing housing 42 may be provided in aluminum alloy, and may be inserted into a rear wall of the tub 20 when forming the tub 20 through an injection molding. Bearings 43 are installed in between the bearing housing 42 and the driving shaft 41, such that the driving shaft 41 may be smoothly rotated.

In a wash cycle, the motor 40 rotates the drum 30 at low speed in a reverse direction as well as in a normal direction, and accordingly, the laundry at an inside the drum 30 repeats the ascending and descending motions, and thus, stain is removed from the laundry.

In a spin-dry cycle, as the motor 40 rotates the drum 30 in a single direction at high speed, by the centrifugal force applied to the laundry, water is separated from the laundry.

In a spin-dry process, as the drum 30 is rotated, if the laundry is eccentrically placed at a particular portion at an inside the drum 30 without being evenly distributed, unbalanced load is generated in the drum 30, and the rotational motion of the drum 30 becomes less stable, and thus vibration and noise are generated.

Thus, the washing machine 1 may include a balancer 35 to stabilize the rotation motion of the drum 30. The balancer 35 may be formed in pairs, as one of the pair of balancers 35 is formed at the front surface panel 32 of the drum 30, while the other one of the pair of balancers 35 is formed at the rear surface panel of the drum 30.

A water supply pipe 60 is installed at an upper side of the tub 20 to supply wash water to the tub 20. One end portion of the water supply pipe 60 is connected to an outside water supply source (now shown), while the other end portion of the water supply pipe 60 is connected to a detergent feeding apparatus 50.

The detergent feeding apparatus 50 is connected to the tub 20 through a connecting hose 54. The water supplied through the water supply pipe 60 passes through the detergent feeding apparatus 50, and, along with the detergent, is supplied to an inside the tub 20.

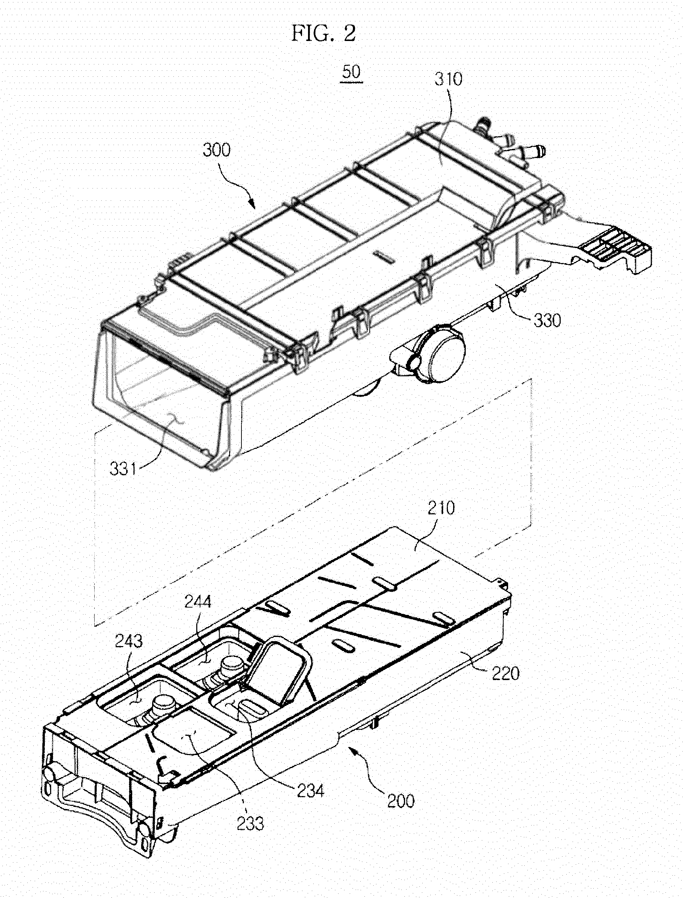

FIG. 2 is a perspective view illustrating a detergent feeding apparatus of a washing machine in accordance with one embodiment.

As illustrated on FIG. 2, the detergent feeding apparatus 50 includes a detergent container 200, and a detergent container housing 300 to accommodate the detergent container 200.

The detergent container 200, is inserted in a detergent container inserting hole 331 formed at a front of the detergent container housing 300. The detergent container 200 may be mounted to an inside the detergent container housing 300 in a sliding manner.

The detergent container housing 300 is fixedly mounted at the washing machine 1(see, for example, FIG. 1), and a user inputs a detergent into the detergent container 200 after separating only the detergent container 200 from the detergent container housing 200, and then the user mounts the detergent container 200 again to the detergent container housing 300.

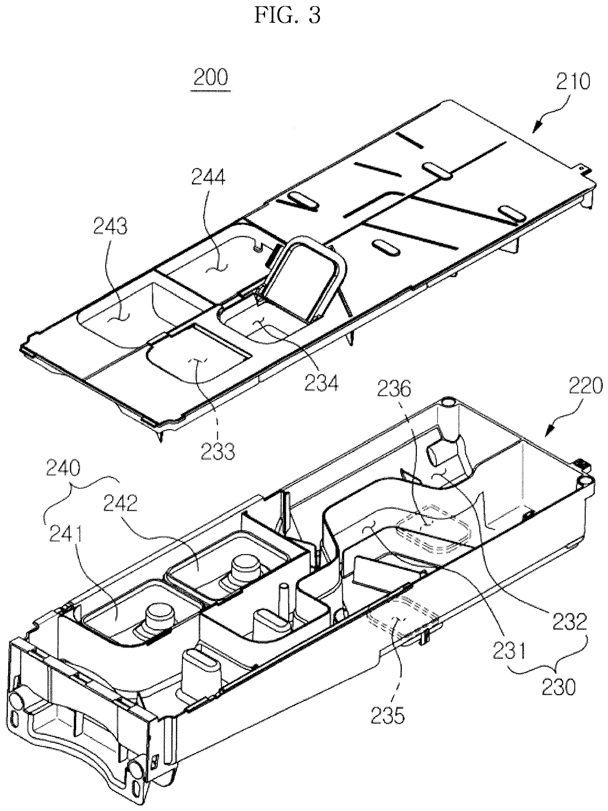

FIG. 3 is a perspective view illustrating a detergent container of the detergent feeding apparatus on FIG. 2.

As illustrated on FIG. 3, a detergent container body 220 forms the exterior of the detergent container 200. A detergent container cover 210 may be mounted at an upper portion of the detergent container body 220, such that the detergent contained at the detergent container body 220 is prevented from overflowing.

An automatic detergent accommodating unit 230 is formed at an inside the detergent container body 220, such that, in a case when a user inputs excessive amount of the detergent at one time, suggested amount of detergent among the detergent input by the user is automatically input to an inside the drum 30 (see FIG. 1). A manual detergent accommodating unit 240 may be formed at an inside the detergent container body 220 while being separately divided from the automatic detergent accommodating unit 230. The manual detergent accommodating unit 240 may be provided in a way that a user can manually input a detergent at the time when a wash is needed to be performed.

The automatic detergent accommodating unit 230, is needed to accommodate a large amount of detergent at one time, and thus, the automatic detergent accommodating unit 230 is formed to have a width wider than the manual detergent accommodating unit 240.

In the embodiment, it is illustrated that the automatic detergent accommodating unit 230 and the manual detergent accommodating unit 240 are formed in the detergent container body 220, but an embodiment having only the automatic detergent accommodating unit 240 formed may be included in the present disclosure.

The automatic detergent accommodating unit 230 may include a first accommodating unit 231 and a second accommodating unit 232. A liquid detergent is input into either the first accommodating unit 231 or the second accommodating unit 232, and a fabric softener or a bleach agent may be input into the other one of the first accommodating unit 231 and the second accommodating unit 232. In the embodiment, only the first accommodating unit 231 and the second accommodating unit 232 are illustrated, but having three or more than three accommodating units formed may be included in the embodiment of the present disclosure.

The manual detergent accommodating unit 240 includes a third accommodating unit 241 and a fourth detergent accommodating unit 242, and a liquid detergent is input into either the third accommodating unit 241 or the fourth accommodating unit 242, and a fabric softener or a bleach agent may be input into the other one of the third accommodating unit 241 and the fourth accommodating unit 242.

A valve mounting hole 235 and a valve mounting hole 236 are formed at a bottom of the first accommodating unit 231 and a bottom of the second accommodating unit 232 of the automatic detergent accommodating unit 230, respectively, and a valve apparatus 100 may be mounted to each of the valve mounting hole 235 and the valve mounting hole 236.

The detergent container cover 210 is mounted at an upper portion of the detergent container body 220. At the detergent container cover 210, detergent input holes 233, 234, 243, and 244 are formed at the positions to which the first accommodating unit 231, the second accommodating unit 232, the third accommodating unit 241, and the fourth accommodating units 242 correspond. Through the detergent input holes 233, 234, 243, and 244, a user inputs a detergent to the accommodating units 230 and 240.

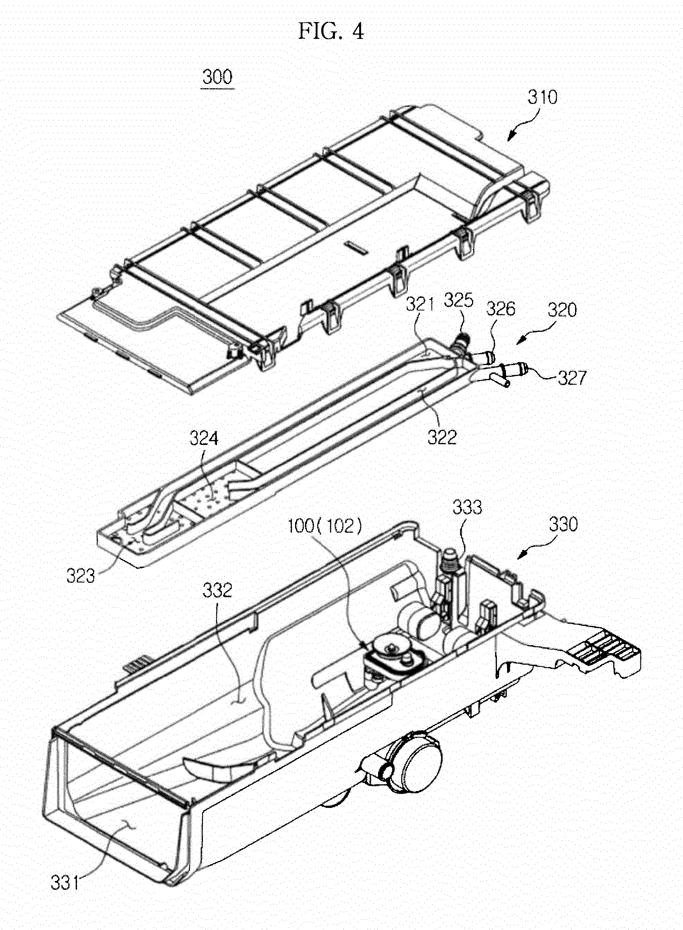

FIG. 4 is a perspective view illustrating a detergent container housing of the detergent feeding apparatus on FIG. 2.

As illustrated on FIG. 4, a housing body 330 having an open front portion and an upper portion thereof forms an overall exterior of the detergent container housing 300. The detergent container inserting hole 331 is formed at the open front portion of the housing body 330, such that the detergent container 200 (FIG. 2) may be inserted into in a sliding manner. A dispenser 320 having at least one flow path may be mounted at the open upper portion of the housing body 330. A housing cover 310 may be mounted at an upper portion of the dispenser 320 to cover the dispenser 320 and the housing body 330.

The dispenser 320 includes a first flow path 321 and a second flow path 322. Two units of water supply pipe 60 may be connected to the first flow path 321 to supply cold water and hot water, and for such, a first connecting pipe 325 and a second connecting pipe 326 may be formed. A third connecting pipe 327 may be formed at the second flow path 322, such that the second flow path 322 may be connected to the one water supply pipe 60.

The first flow path 321 is connected to a first wash water outlet unit 323.The first wash water outlet unit 323 is formed at a position allowing the third accommodating unit 241 is disposed at a lower portion of the first wash water outlet unit 323 in a state that the detergent container 200 (FIG. 3) is insertedly mounted into the housing body 330. The second flow path 322 is connected to a second wash water outlet unit 324.The second wash water outlet unit 324 is formed at a position allowing the fourth accommodating unit 242 to be disposed at a lower position of the second wash water outlet unit 324 in a state the detergent container 200 (FIG. 3) is insertedly mounted into the housing body 330.

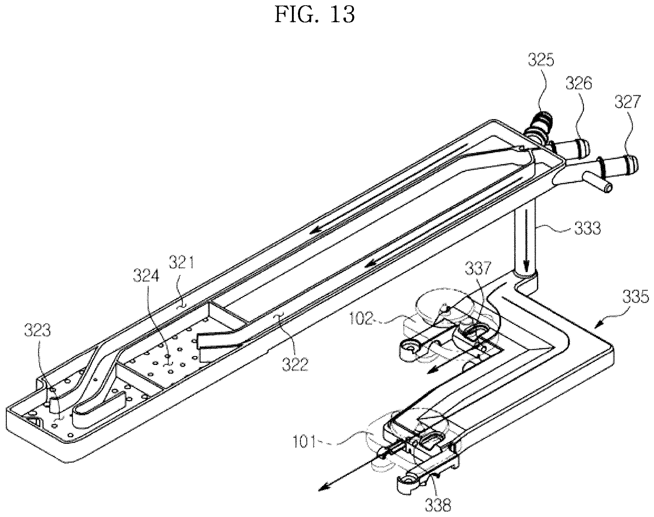

That is, the dispenser 320 exists to supply wash water to the manual detergent accommodating unit 240. In order to supply suggested amount of detergent, wash water is not directly supplied to the automatic detergent accommodating unit 230, but supplied through another path. The description for such will be provided on FIG. 13.

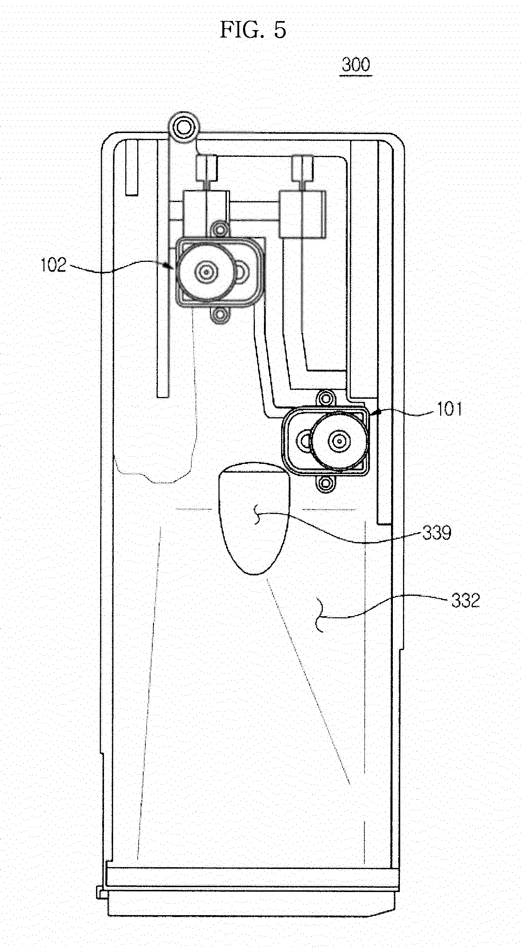

FIG. 5 is a top view a housing body of the detergent container housing on FIG. 4.

As illustrated on FIGS. 4 and 5, a housing room 332 is formed at an inside the detergent container housing 300. The detergent container 200 is accommodated at an inside the housing room 332. Awash water outflow hole 339 may be formed at a lower portion of the housing room 332, such that the wash water mixed with the detergent may outflow toward the tub 20 (FIG. 1).

An opening hole (not shown) is formed at a lower portion of each of the third accommodating unit 241 (FIG. 3) and the fourth accommodating unit 242 (FIG. 3) of the detergent container 200 (FIG. 3), such that the wash water mixed with the detergent flows into the housing room 332 through the opening holes.

A first valve mounting hole 235 (FIG. 3) and a second valve mounting hole 236 (FIG. 3) are respectively formed at a lower portion of the first accommodating unit 231 (FIG. 3) and at a lower portion of the second accommodating unit 232 (FIG. 3) that are formed at an inside the automatic detergent accommodating unit 230 (FIG. 3) at an inside the detergent container 200 (FIG. 3). With respect to the housing body 330, a first valve apparatus 101 and a second valve apparatus 102 are mounted at positions corresponding to the first valve mounting hole 235 and the second valve mounting hole 236, respectively.

Each of the first valve apparatus 101 and the second valve apparatus 102 is connected to the first accommodating unit 231 and the second accommodating unit 232, respectively, through the first valve mounting hole 235 and the second valve mounting hole 236.

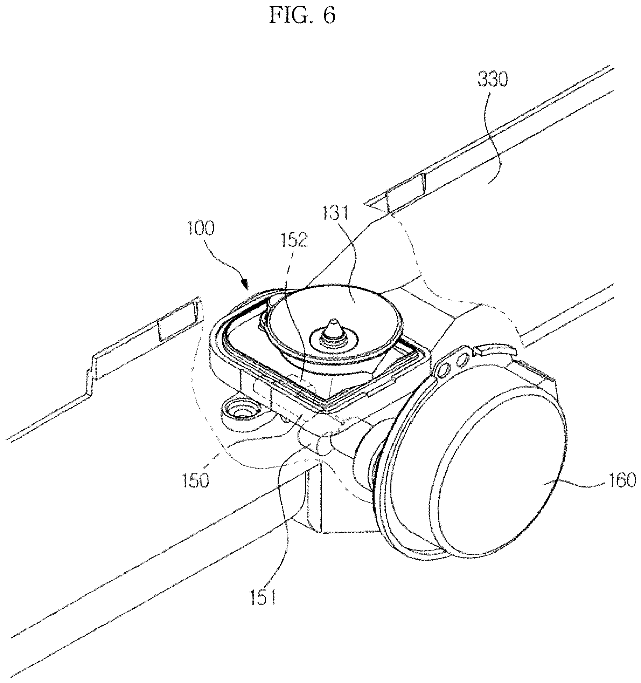

FIG. 6 is a drawing illustrating a valve apparatus and a valve driving unit of the detergent feeding apparatus on FIG. 2.

As illustrated on FIG. 6, a valve driving unit is disposed at a lower portion of the valve apparatus 100. The valve driving unit may include a cam 150 and a motor 160.

The valve apparatus 100, as previously described, is disposed at the housing room 332 at an inside the detergent container housing 300. The housing room 332 is the portion through which wash water passes, and thus, the housing room 332 is not suitable for the motor 160 to be disposed. Thus, the motor 160 is disposed at an outside the detergent container housing 300. For such, the cam 150 is disposed in a way to penetrate the sidewall of the detergent container housing 300, such that the cam 150 may be connected to the valve apparatus 100 disposed at an inside the housing room 332 and to the motor 160 disposed at an outside the detergent container housing 300.

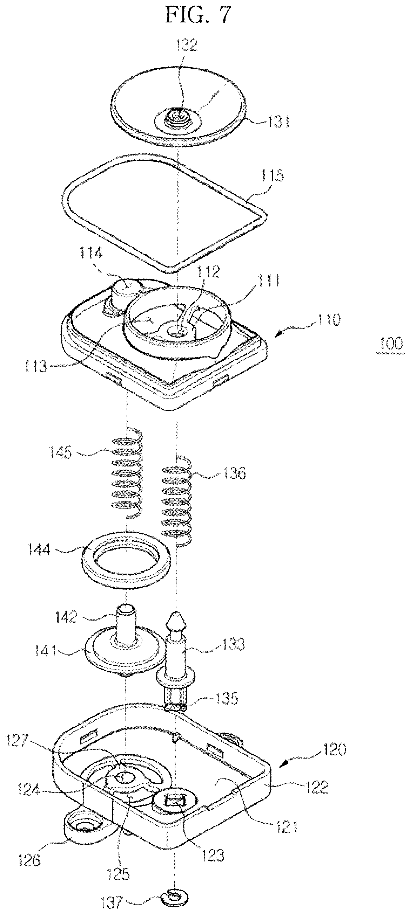

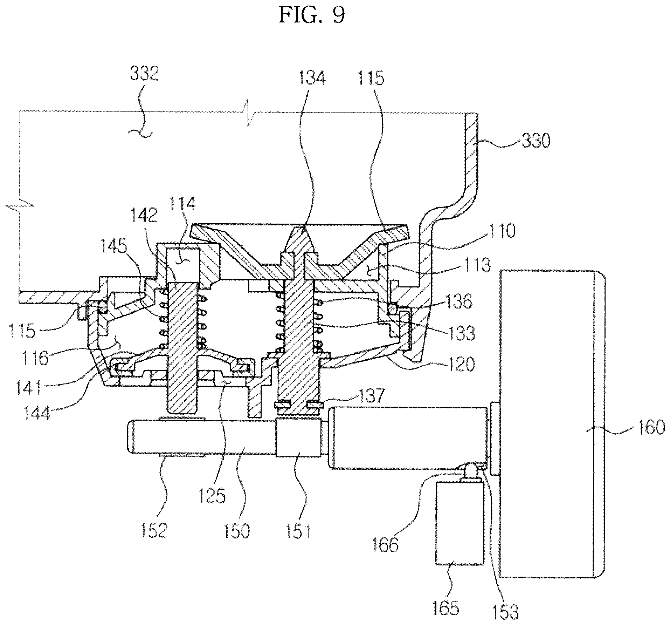

FIG. 7 is a drawing illustrating a structure of the valve apparatus on FIG. 6. FIG. 9 is a cross sectional view illustrating the valve apparatus on FIG. 6.

As illustrated on FIGS. 7 and 9, the valve apparatus 100 forms an exterior as an upper portion cap 110 and a lower portion cap 120 are coupled to each other. The lower portion cap 120 includes a cap bottom 121, and a cap side surface 122 protrudedly formed from the cap bottom 121 toward an upper side. The upper portion cap 110 is inserted into an inner side of the cap side surface 122, and is coupled to the lower portion cap 120. After the upper portion cap 111 is insertedly mounted into the lower portion cap 120, a cap sealing member 115 is inserted into a coupling portion of the upper portion cap 110 and the lower portion cap 120, and wash water is prevented from being introduced to an inside the valve apparatus 100. The lower portion cap 120 and the upper portion cap 110 are coupled to each other to form a detergent accommodating room 116 at an inside therein.

The size of the detergent accommodating room 116 may be formed differently according to embodiments. By controlling the size of the detergent accommodating room 116, the amount of the detergent introduced from the detergent container 200 to the housing room 332 may be controlled.

As a portion of an upper portion of the upper portion cap 110 is open, a detergent inlet hole 113 is formed. A first supporting leg 111 is provided at an inside the detergent inlet hole 113, and as a central portion of the first supporting leg 111 is open, an upper portion mounting hole 112, at which an inflow shaft 133 may be mounted, may be formed.

The inflow shaft 133 is provided at an inside the detergent accommodating room 116, and is configured to move vertically. An upper end of the inflow shaft 133 may be formed in a pointed manner, so that the upper end of the inflow shaft 133 may be fixedly inserted into a shaft mounting hole 132, which is formed at a central portion of an inlet valve 131.

The inflow shaft 133 penetrates the upper portion mounting hole 112, and is coupled to the inlet valve 131 at an upper portion of the detergent inlet hole 113. As the inflow shaft 133 and the inlet valve 131 are coupled to each other, and thus, if the inflow shaft 133 moves vertically, the inlet valve 131 also is moved vertically.

The inlet valve 131 is provided with a shape having a width gradually increasing from a lower portion thereof to a upper portion thereof, and may be formed in a shape of a cone as a whole. The upper portion of the inlet valve 131 has a width equal to or wider the detergent inlet hole 113, so that, when the inlet valve 131 makes contact with the detergent inlet hole 113, the detergent inlet hole 113 is closed, and when the inlet valve 131 is moved to an upper portion by the inflow shaft 133, the detergent inlet hole 113 is open.

The inflow shaft 133 is inserted into a lower portion settling unit 123 formed at the cap bottom 121. The lower portion settling unit 123 may be formed as the cap bottom 121 of the lower portion cap 120 is open. A groove 135 may be formed at a lower end of the inflow shaft 133, so that an inflow shaft sealing member 137 may be mounted to the lower end of the inflow shaft 133. The inflow shaft 133 penetrates the lower portion settling unit 123, and is protruded in a lower direction of the lower portion cap 120. The portion protruded in a lower direction of the lower portion cap 120 makes contact with the cam 150, which will be described later, and performs a role in moving the inflow shaft 133 entirely in a vertical direction.

A first spring 136 is disposed in between the inflow shaft 133 and the upper portion cap 110. The inflow shaft 133 penetrates the first spring 136, and is coupled to the inlet valve 131. The first spring 136, by the elasticity thereof, performs a role in applying a pressure on the inflow shaft 133 toward a lower side. Since the inlet valve 131 normally closes the detergent inlet hole 113 and temporarily opens the detergent inlet hole 113 for the detergent to be introduced to the detergent accommodating room 116, the inflow shaft 133 is needed to be pressed toward a lower side.

As a portion of the cap bottom 121 of the lower portion cap 120 is open, a detergent outlet hole 125 is formed. A second supporting leg 127 is provided at an inside the detergent outlet hole 125, and as a central portion of the second supporting leg 127 is open, a lower portion mounting hole 124 may be formed.

A outlet shaft 142 penetrates the lower portion mounting hole 124, and is protruded toward a lower side of the lower portion cap 120. An outlet valve 141 is formed by protruded in a radius direction toward an outer side from the central portion of the outlet shaft 142. The outlet valve 141 may be integrally formed with the outlet shaft 142, or may be separately manufactured and coupled. At the outlet valve 141, an outlet valve sealing member 144 in a shape of a ring is coupled to the outlet valve 141 while being inserted around the outlet valve 141.

The outlet shaft 142 is provided so as to enable a vertical movement at an inside the detergent accommodating room 116. Thus, the outlet valve 141 coupled to the outlet shaft 142 is configured to move vertically at an inside the detergent accommodating room 116.

An upper end of the outlet shaft 142 is accommodated at an upper portion settling unit 114 provided at the upper portion cap 110. The upper portion settling unit 114, by considering the outlet shaft 142 that moves vertically, may be protrudedly formed from the upper portion cap 110 toward an upper side.

The outlet valve 141 is formed larger than the detergent outlet hole 125, so that, when the outlet valve 141 makes contact with the detergent outlet hole 125, the outlet valve 141 closes the detergent outlet hole 125, and when the outlet valve 141 moves toward an upper side and is spaced apart from the detergent outlet hole 125, the outlet valve 141 opens the detergent outlet hole 125.

A second spring 145 is disposed in between the outlet valve 141 and the upper portion settling hole 114 to press the outlet valve 141 to a lower side. As same as the inlet valve 131, the outlet valve 141 as well is normally needed to close the detergent outlet hole 125.

A coupling unit 126 is formed at a side surface of the lower portion cap 120 to mount the valve apparatus 100 to the detergent container housing 300.

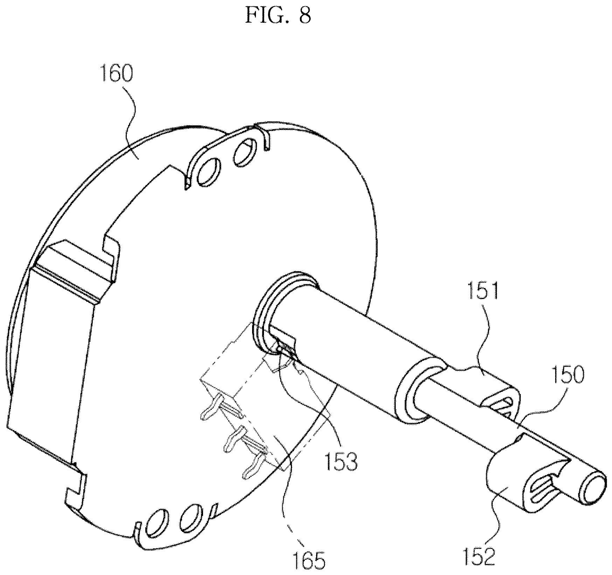

FIG. 8 is a drawing illustrating a valve driving unit of the valve apparatus of FIG. 6.

As illustrated on FIGS. 8 and 9, a driving unit is disposed at a lower side of the valve apparatus 100. The driving unit may include the cam 150, and the motor 160 coupled to one end portion of the cam 150. The cam 150 may include an outlet protrusion 152 and an inlet protrusion 151.

The outlet protrusion152 is disposed at a lower side of the outlet shaft 142, and performs a role in moving the outlet shaft 142 vertically. The inlet shaft 151 is disposed at a lower side of the inlet shaft 133, and performs a role in moving the inlet shaft 133 vertically.

As the outlet shaft 142 and the inlet shaft 133 are needed to alternatively ascend or descend, the outlet protrusion 152 and the inlet protrusion 151 are protruded while facing opposite direction to each other.

The motor 160 is configured to rotate the cam 150. A position determining groove may be formed at an end portion of the cam 150. As a switch protrusion 166 of a switch 165 electrically connected to the motor 160 is disposed to make contact with the position determining groove 153, the position at which the cam 150 is rotated may be determined.

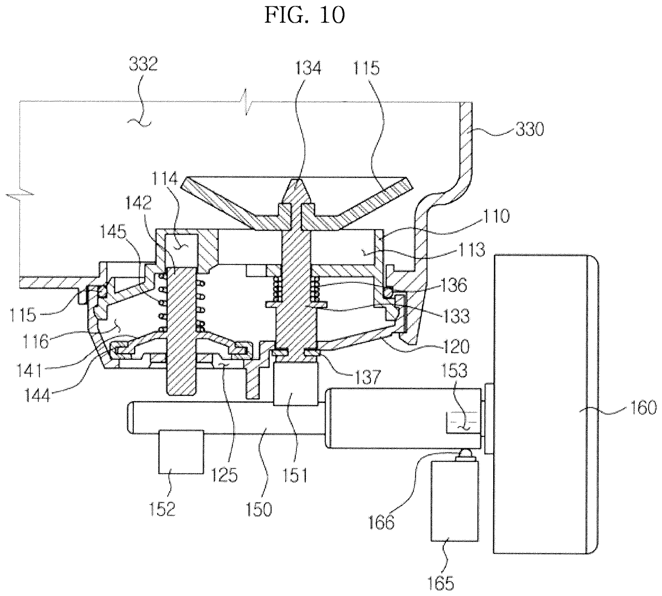

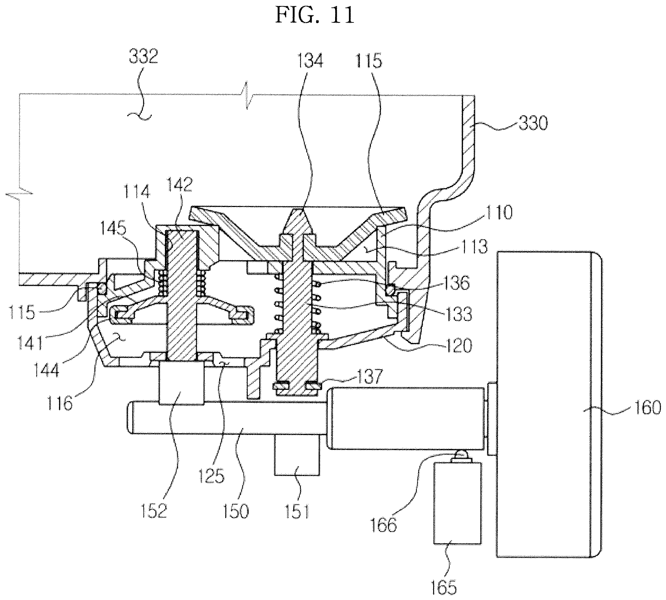

FIGS. 10 and 11 are drawings illustrating an operation of the valve apparatus on FIG. 6.

FIG. 10 is a drawing illustrating the state of wash water introduced to the detergent accommodating room 116 of the valve apparatus 100 from the detergent container 200.

As illustrated on FIG. 10, if the inlet protrusion 151 pushes the inlet shaft 133 toward an upper side as the cam 150 is rotated, the inlet valve 131 coupled to the inlet shaft 133 as well ascends toward an upper side. As the inlet valve 131 is ascended toward an upper side, the detergent inlet hole 113 is open, and the detergent at the detergent container 200 fills the detergent accommodating room 116.

In the state as such, the outlet protrusion 152 is formed in a way to face the opposite direction of the inlet protrusion 151, the outlet protrusion 152 does not push the outlet shaft 142 toward an upper side. That is, the outlet valve 141 is pressed toward a lower side only by the second spring 145, thereby closing the detergent outlet hole 125. Thus, the detergent at the detergent accommodating room 116 is not discharged to the housing room 332.

FIG. 11 is a drawing illustrating the state when the detergent at an inside the detergent accommodating room 116 is introduced to the housing room 332.

As illustrated on FIG. 11, if the outlet protrusion 152 pushes the outlet shaft 142 toward an upper side as the cam 150 is rotated, the outlet valve 141 coupled to the outlet shaft 142 ascends toward an upper side. As the outlet valve 141 ascends toward an upper side, the detergent outlet hole 125 is open, and the detergent at the detergent accommodating room 116 is introduced to the housing room 332.

The inlet protrusion 151 formed in the opposite direction to the outlet protrusion 152 does not make contact with the inlet shaft 133. At this time, the inlet valve 131 is in the state of closing the detergent inlet hole 113, the detergent at the detergent container 200 is not introduced to the detergent accommodating room 116, and only the detergent that is present at the detergent accommodating room 116 is introduced to the housing room 332. Thus, suggested amount of detergent may be introduced to the housing room 332.

By the rotation of the cam 150, the detergent may be automatically introduced from the detergent container 200 to the tub through the housing room 332. Furthermore, the suggested amount of the detergent determined by the size of the detergent accommodating room 116 may be introduced.

Since the detergent is introduced through two stages, in other words, through the stage when the detergent is filled at the detergent accommodating room 116, and through the stage when the detergent at the detergent accommodating room 116 is discharged to the housing room, , the detergent at the detergent container 200 is prevented from being continuously introduced in the case when the washing machine 1 stops operating while in the process of the detergent being input.

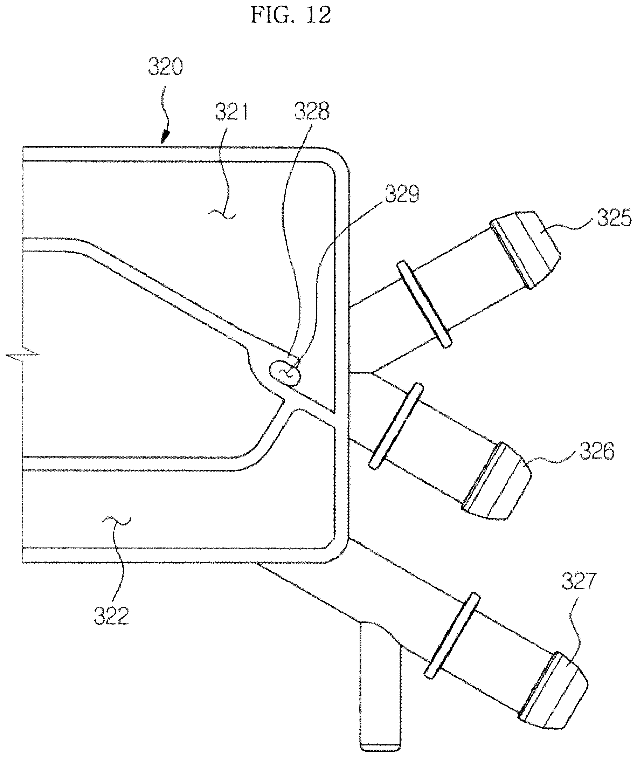

FIG. 12 is a drawing illustrating a dispenser of FIG. 4.

As illustrated on FIG. 12, the first connecting pipe 325 and the second connecting pipe 326 supply wash water to the first flow path 321 of the dispenser 320. With reference to the first flow path 321, a distribution hole 329 is formed at a portion at which the first connecting pipe 325 and the second connecting pipe 326 discharge wash water, and some of wash water is discharged to the distribution hole 329.

In order for the wash water, which is discharged through the first connecting pipe 325 and the second connecting pipe 326, to be easily distributed to the distribution hole 329, a distribution protrusion 328 may be formed as a boundary panel of the first flow path 321 is extended.

The distribution protrusion 328 is configured to block the wash water that is discharged, such that the wash water may be easily distributed to the distribution hole 329. By controlling the size of the distribution protrusion 328, the amount of the wash water introduced to the distribution hole 329 may be controlled. The amount of the wash water being introduced to each the first flow path 321 and the distribution hole 329 may vary, according to an embodiment, but the ratio of the amount of the wash water introduced to the first flow path 321 and the wash water introduced to the distribution hole 329 may be about 7:3.

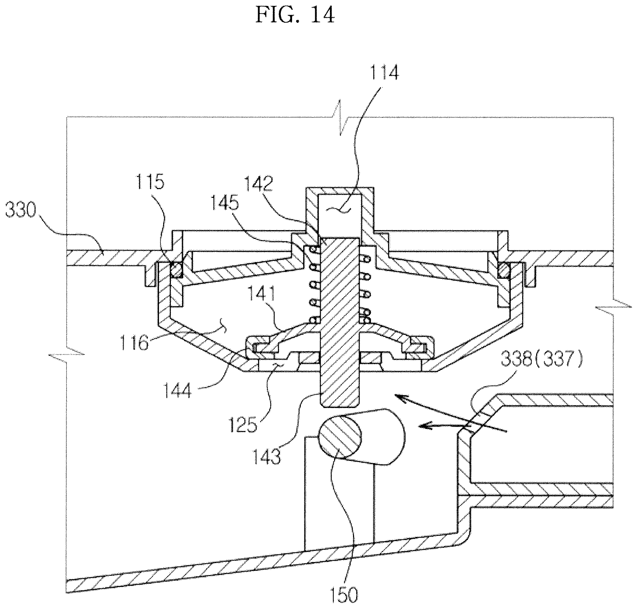

FIGS. 13 and 14 are drawings illustrating a flow of wash water of a detergent feeding apparatus of a washing machine in accordance with one embodiment of the present disclosure.

As illustrated on FIGS. 13 to 14, the wash water introduced to the distribution hole 329 is introduced, through a distribution pipe 333, to a distribution flow path 335 formed at the housing body 33 (FIG. 4).

A first outlet hole 337 and a second outlet hole 338 are formed at the distribution flow path 335. The wash water introduced to the distribution flow path 335, through the first outlet hole 337 and the second outlet hole 338, is discharged to the housing room 332.

The first valve apparatus 101 is adjacently disposed to the first outlet hole 337, and the second valve apparatus 102 is adjacently disposed to the second outlet hole 338. In particular, with reference to the valve apparatus 100, the first outlet hole 337 and the second outlet hole 338 are formed, such that wash water may be discharged toward the detergent outlet hole 125.

The wash water is discharged to the detergent outlet hole 125, and along with the detergent that is discharged from the detergent outlet hole 125, is introduced to the tub 20 (FIG. 1). Furthermore, since the wash water is discharged to the detergent outlet hole 125, the function in preventing the detergent outlet hole 125 from being clogged or polluted by the detergent having viscosity may be performed.

Although a few embodiments have been shown and described, it would be appreciated by those skilled in the art that changes may be made in these embodiments without departing from the principles of the disclosure, the scope of which is defined in the claims.

## Claims

1. A washing machine, comprising:
a cabinet (10);
a tub (20) disposed inside of the cabinet (10) to accommodate water at an inside therein, and
a detergent feeding apparatus (50) to supply at least one detergent, wherein the detergent feeding apparatus (50) comprises:
a detergent container housing (300) installed at an inside of the cabinet (10) and a detergent container (200) detachably mounted at the detergent container housing (300) while accommodating detergent,
**characterized in that**
the detergent feeding apparatus (50) supplies at least one detergent along with wash water to the tub (20);
at least one valve apparatus (100) is configured to allow the detergent accommodated at the detergent container (200) to be automatically put into the detergent container housing (300), and
wherein the at least one valve apparatus (100) comprises:
a detergent accommodating room (116) to accommodate detergent at an inside therein;
an inlet hole (113) introducing wash water to the detergent accommodating room (116);
an outlet hole (125) discharging wash water from the detergent accommodating room (116);
an inlet valve (101, 131) opening and closing the inlet hole (113), and
an outlet valve (102, 141) opening and closing the outlet hole (125); and
a valve driving unit provided to selectively open and close the inlet valve (101, 131) and the outlet valve (102, 141).

2. The washing machine of claim 1, wherein:
the inlet valve (101, 131) and the outlet valve (102, 141) alternatively operate, and an introduction of the detergent into the detergent accommodating room (116) and a discharge of the detergent from the detergent accommodating room (116) are alternatively occurred.

3. The washing machine of claim 1, wherein:
the valve driving unit (150, 160) is disposed at a lower portion of the valve apparatus (100), and configured in a way that the inlet valve and the outlet valve are alternatively operated.

4. The washing machine of claim 3, wherein:
the valve apparatus (100) further comprises an inlet shaft (133) to allow the inlet valve (101, 131) to operate in a way to move vertically, and an outlet shaft (142) configured to allow the outlet valve (102, 141) to operate in a way to move vertically.

5. The washing machine of claim 4, wherein:
the valve driving unit (150, 160) comprises a cam (150) rotatively disposed at a lower portion of the valve apparatus (100), and
as the cam (150) is rotated, the outlet shaft (142) and the inlet shaft (133) are alternatively ascended or descended.

6. The washing machine of claim 5, wherein:
the cam (150) comprises an inlet protrusion (151) to move the inlet shaft (133) vertically, and an outlet protrusion (152) to move the outlet shaft (142) vertically, and
the inlet protrusion (151) and the outlet protrusion (152) are formed while facing opposite direction to each other.

7. The washing machine of claim 1, wherein:
the detergent feeding apparatus (50) further comprises an outlet hole (125) to discharge wash water to the outlet valve (102, 141).

8. The washing machine of claim 1, wherein:
the detergent container (200) comprises an automatic detergent accommodating unit (230) at which detergent automatically supplied by the valve apparatus (100) is accommodated, and a manual detergent accommodating unit (240) at which detergent manually supplied is accommodated, and
the automatic detergent accommodating unit (230) is connected to the at least one valve apparatus (100).

9. The washing machine of claim 8, wherein:
the detergent feeding apparatus (50), in order to supply wash water to the manual detergent accommodating unit (240), further comprises a dispenser (320) mounted at an inside the detergent container housing (300) while being disposed at an upper portion of the manual detergent accommodating unit (240).

10. The washing machine of claim 9, wherein:
the dispenser (320) comprises at least one flow path (321, 322) configured to supply wash water to the manual detergent accommodating unit (240).

11. The washing machine of claim 10, wherein:
the detergent feeding apparatus (50) further comprises a distribution flow path (335) configured to supply wash water to the valve apparatus (100) and connected to the dispenser (320).

12. The washing machine of claim 11, wherein:
the at least one flow path (321, 322) comprises a distribution hole (329) formed in a way that wash water is distributed to the distribution flow path (335).

13. The washing machine of claim 12, wherein:
the distribution flow path (335) comprises an outlet hole (337, 338) formed at one end portion of the distribution flow path to discharge wash water toward the valve apparatus (100).

14. The washing machine of claim 12, wherein:
the dispenser (320) comprises at least one partition to divide the at least one flow path, and a distribution protrusion (328) protrudedly formed from the partition to surround a portion of the distribution hole (329).

15. The washing machine of claim 14, wherein:
by controlling a size of the distribution protrusion (328), the amount of wash water introduced to the distribution hole (329) is controlled.

## Patentansprüche

1. Waschmaschine, die umfasst:
ein Gehäuse (10);
eine Wanne (20), die innerhalb des Gehäuses (10) angeordnet ist, um Wasser an einer Innenseite darin aufzunehmen, und
eine Waschmittelzuführungsvorrichtung (50), um wenigstens ein Waschmittel zuzuführen, wobei die Waschmittelzuführungsvorrichtung (50) umfasst:
ein Waschmittelbehältergehäuse (300), das an einer Innenseite des Gehäuses (10) installiert ist, und einen Waschmittelbehälter (200), der an dem Waschmittelbehältergehäuse (300) abnehmbar angebracht ist, während ein Waschmittel aufgenommen wird,
**dadurch gekennzeichnet, dass**
die Waschmittelzuführungsvorrichtung (50) der Wanne (20) wenigstens ein Waschmittel zusammen mit Waschwasser zuführt;
wenigstens eine Ventilvorrichtung (100) konfiguriert ist, um es dem in dem Waschmittelbehälter (200) aufgenommenen Waschmittel zu ermöglichen, dass es automatisch in das Waschmittelbehältergehäuse (300) gegeben wird, und
wobei die wenigstens eine Ventilvorrichtung (100) umfasst:
einen Waschmittelaufnahmeraum (116), um Waschmittel an einer Innenseite darin aufzunehmen;
eine Einlassöffnung (113), die Waschwasser in den Waschmittelaufnahmeraum (116) einleitet;
eine Auslassöffnung (125), die Waschwasser aus dem Waschmittelaufnahmeraum (116) auslässt;
ein Einlassventil (101, 131), das die Einlassöffnung (113) öffnet und schließt, und
ein Auslassventil (102, 141), das die Auslassöffnung (125) öffnet und schließt; und
eine Ventilantriebseinheit, die bereitgestellt wird, um das Einlassventil (101, 131) und das Auslassventil (102, 141) selektiv zu öffnen und zu schließen.

2. Waschmaschine nach Anspruch 1, wobei:
das Einlassventil (101, 131) und das Auslassventil (102, 141) wechselseitig arbeiten,
und ein Einleiten des Waschmittels in den Waschmittelaufnahmeraum (116) und ein Auslassen des Waschmittels aus dem Waschmittelaufnahmeraum (116) wechselseitig erfolgen.

3. Waschmaschine nach Anspruch 1, wobei:
die Ventilantriebseinheit (150, 160) an einem unteren Teil der Ventilvorrichtung (100) angeordnet und in einer Weise konfiguriert ist, dass das Einlassventil und das Auslassventil wechselseitig betätigt werden.

4. Waschmaschine nach Anspruch 3, wobei:
die Ventilvorrichtung (100) des Weiteren eine Einlasswelle (133), um dem Einlassventil (101, 131) zu ermöglichen, in einer Weise zu arbeiten, dass es sich vertikal bewegt, und eine Auslasswelle (142) umfasst, die konfiguriert ist, um dem Auslassventil (102, 141) zu ermöglichen, in einer Weise zu arbeiten, dass es sich vertikal bewegt.

5. Waschmaschine nach Anspruch 4, wobei:
die Ventilantriebseinheit (150, 160) einen Nocken (150) umfasst, der drehbar an einem unteren Teil der Ventilvorrichtung (100) angeordnet ist, und
wenn der Nocken (150) gedreht wird, die Auslasswelle (142) und die Einlasswelle (133) wechselseitig angehoben oder abgesenkt werden.

6. Waschmaschine nach Anspruch 5, wobei:
der Nocken (150) einen Einlassvorsprung (151), um die Einlasswelle (133) vertikal zu bewegen, und einen Auslassvorsprung (152) umfasst, um die Auslasswelle (142) vertikal zu bewegen, und
der Einlassvorsprung (151) und der Auslassvorsprung (152) ausgebildet werden, während sie in entgegengesetzter Richtung einander zugewandt sind.

7. Waschmaschine nach Anspruch 1, wobei:
die Waschmittelzuführungsvorrichtung (50) des Weiteren eine Auslassöffnung (125) umfasst, um Waschwasser zum Auslassventil (102, 141) auszulassen.

8. Waschmaschine nach Anspruch 1, wobei:
der Waschmittelbehälter (200) eine automatische Waschmittelaufnahmeeinheit (230), in der von der Ventilvorrichtung (100) automatisch zugeführtes Waschmittel aufgenommen wird, und eine manuelle Waschmittelaufnahmeeinheit (240) umfasst, in der manuell zugeführtes Waschmittel aufgenommen wird, und
die automatische Waschmittelaufnahmeeinheit (230) mit der wenigstens einen Ventilvorrichtung (100) verbunden ist.

9. Waschmaschine nach Anspruch 8, wobei:
die Waschmittelzuführungsvorrichtung (50), um der manuellen Waschmittelaufnahmeeinheit (240) Waschwasser zuzuführen, des Weiteren einen Spender (320) umfasst, der an einer Innenseite des Waschmittelbehältergehäuses (300) angebracht ist, während er an einem oberen Teil der manuellen Waschmittelaufnahmeeinheit (240) angeordnet ist.

10. Waschmaschine nach Anspruch 9, wobei:
der Spender (320) wenigstens einen Strömungsweg (321, 322) umfasst, der konfiguriert ist, um Waschwasser zur manuellen Waschmittelaufnahmeeinheit (240) zuzuführen.

11. Waschmaschine nach Anspruch 10, wobei:
die Waschmittelzuführungsvorrichtung (50) des Weiteren einen Verteilungsströmungsweg (335) umfasst, der konfiguriert ist, um der Ventilvorrichtung (100) Waschwasser zuzuführen, und der mit dem Spender (320) verbunden ist.

12. Waschmaschine nach Anspruch 11, wobei:
der wenigstens eine Strömungsweg (321, 322) eine Verteilungsöffnung (329) umfasst, die in einer Weise ausgebildet ist, dass Waschwasser zum Verteilungsströmungsweg (335) verteilt wird.

13. Waschmaschine nach Anspruch 12, wobei:
der Verteilungsströmungsweg (335) eine an einem Endteil des Verteilungsströmungsweges ausgebildete Auslassöffnung (337, 338) umfasst, um Waschwasser zur Ventilvorrichtung (100) auszulassen.

14. Waschmaschine nach Anspruch 12, wobei:
der Verteiler (320) wenigstens eine Trennwand, um den wenigstens einen Strömungsweg zu teilen, und einen Verteilungsvorsprung (328) umfasst, der von der Trennwand vorspringend ausgebildet ist, so dass er einen Teil der Verteilungsöffnung (329) umgibt.

15. Waschmaschine nach Anspruch 14, wobei
durch Steuern einer Größe des Verteilungsvorsprungs (328) die Menge des in die Verteilungsöffnung (329) eingeleiteten Waschwassers gesteuert wird.

## Revendications

1. Machine à laver, comprenant:
une armoire (10);
une cuve (20) disposée à l'intérieur de l'armoire (10) pour recevoir de l'eau à l'intérieur de celle-ci, et
un appareil d'alimentation en détergent (50) pour fournir au moins un détergent, dans lequel l'appareil d'alimentation en détergent (50) comprend:
un boîtier de récipient à détergent (300) installé à l'intérieur de l'enceinte (10) et un récipient (200) à détergent monté de manière détachable sur le boîtier de récipient à détergent (300) tout en contenant un détergent,
**caractérisé en ce que**
le dispositif d'alimentation en détergent (50) fournit au moins un détergent avec de l'eau de lavage à la cuve (20);
au moins un appareil à vanne (100) est configuré pour permettre au détergent logé dans le récipient à détergent (200) d'être mis automatiquement dans le logement du récipient à détergent (300), et
dans lequel le au moins un appareil de vanne (100) comprend:
une chambre de réception de détergent (116) pour recevoir du détergent à l'intérieur de celle-ci;
un trou d'admission (113) introduisant de l'eau de lavage dans la chambre de réception de détergent (116);
un trou de sortie (125) évacuant l'eau de lavage de la pièce de réception de détergent (116);
une vanne d'admission (101, 131) ouvrant et fermant le trou d'admission (113), et
une vanne de sortie (102, 141) ouvrant et fermant le trou de sortie (125); et
une unité de commande de vanne prévue pour ouvrir et fermer sélectivement la vanne d'admission (101, 131) et la vanne de sortie (102, 141).

2. Machine à laver selon la revendication 1, dans laquelle:
la vanne d'admission (101, 131) et la vanne de sortie (102, 141) fonctionnent alternativement,
et une introduction du détergent dans le compartiment de réception de détergent (116) et une évacuation du détergent du compartiment de réception de détergent (116) ont lieu alternativement.

3. Machine à laver selon la revendication 1, dans laquelle:
l'unité d'entraînement de vanne (150, 160) est disposée au niveau d'une partie inférieure de l'appareil de vanne (100), et configurée de manière à ce que la vanne d'admission et la vanne de sortie soient alternativement actionnées.

4. Machine à laver selon la revendication 3, dans laquelle:
le dispositif de vanne (100) comprend en outre un arbre d'admission (133) pour permettre à la vanne d'admission (101, 131) de fonctionner d'une manière à se déplacer verticalement, et un arbre de sortie (142) configuré pour permettre à la vanne de sortie (102, 141) de fonctionner d'une manière à se déplacer verticalement.

5. Machine à laver selon la revendication 4, dans laquelle:
l'unité d'entraînement de vanne (150, 160) comprend une came (150) disposée de manière rotative au niveau d'une partie inférieure du dispositif de vanne (100), et
lorsque la came (150) est tournée, l'arbre de sortie (142) et l'arbre d'admission (133) sont alternativement montés ou descendus.

6. Machine à laver selon la revendication 5, dans laquelle:
la came (150) comprend une protubérance d'admission (151) pour déplacer l'arbre d'admission (133) verticalement, et une protubérance de sortie (152) pour déplacer l'arbre de sortie (142) verticalement, et
la protubérance d'admission (151) et la protubérance de sortie (152) sont formées en faisant face à des directions opposées l'une à l'autre.

7. Machine à laver selon la revendication 1, dans laquelle:
l'appareil d'alimentation en détergent (50) comprend en outre un trou de sortie (125) pour évacuer l'eau de lavage vers la vanne de sortie (102, 141).

8. Machine à laver selon la revendication 1, dans laquelle:
le conteneur de détergent (200) comprend une unité de logement de détergent automatique (230) au niveau de laquelle le détergent fourni automatiquement par le dispositif de vanne (100) est logé, et une unité de logement de détergent manuel (240) au niveau de laquelle le détergent fourni manuellement est logé, et
l'unité de logement automatique de détergent (230) est connectée audit au moins un appareil de vanne (100).

9. Machine à laver selon la revendication 8, dans laquelle:
l'appareil d'alimentation en détergent (50), afin de fournir de l'eau de lavage à l'unité de logement de détergent manuel (240), comprend en outre un distributeur (320) monté à l'intérieur du logement de conteneur de détergent (300) tout en étant disposé au niveau d'une partie supérieure de l'unité de logement de détergent manuel (240).

10. Machine à laver selon la revendication 9, dans laquelle:
le distributeur (320) comprend au moins un chemin d'écoulement (321, 322) configuré pour fournir de l'eau de lavage à l'unité de logement de détergent manuel (240).

11. Machine à laver selon la revendication 10, dans laquelle:
l'appareil d'alimentation en détergent (50) comprend en outre un chemin d'écoulement de distribution (335) configuré pour fournir de l'eau de lavage à l'appareil de vanne (100) et connecté au distributeur (320).

12. Machine à laver selon la revendication 11, dans laquelle:
ledit au moins un chemin d'écoulement (321, 322) comprend un trou de distribution (329) formé de manière à ce que l'eau de lavage soit distribuée au chemin d'écoulement de distribution (335).

13. Machine à laver selon la revendication 12, dans laquelle:
le chemin d'écoulement de distribution (335) comprend un trou de sortie (337, 338) formé au niveau d'une partie d'extrémité du chemin d'écoulement de distribution pour décharger l'eau de lavage vers le dispositif de vanne (100).

14. Machine à laver selon la revendication 12, dans laquelle:
le distributeur (320) comprend au moins une cloison pour diviser le au moins un chemin d'écoulement, et une protubérance de distribution (328) formée en saillie depuis la cloison pour entourer une partie du trou de distribution (329).

15. Machine à laver selon la revendication 14, dans laquelle:
le contrôle de la taille de la protubérance de distribution (328) permet de réguler la quantité d'eau de lavage introduite dans orifice de distribution (329).
